# EUROPÄISCHE PATENTSCHRIFT

(11) **EP 3 499 104 B1**
(45) Veröffentlichungstag und Bekanntmachung des Hinweises auf die Patenterteilung: **24.02.2021**
(21) Anmeldenummer: 18211485.0
(22) Anmeldetag: 11.12.2018
(51) Int. Cl.: F16K 35/02, F16K 31/05

(54) **FLUIDVENTIL**
FLUID VALVE
SOUPAPE À FLUIDE

(30) Priorität: 15.12.2017 DE 102017130208
(43) Veröffentlichungstag der Anmeldung: 19.06.2019
(73) Patentinhaber: GEMÜ Gebr. Müller Apparatebau GmbH & Co. Kommanditgesellschaft, 74653 Ingelfingen (DE)
(72) Erfinder: FRANKENBACH, Klaus, 74670 Forchtenberg-Schleierhof (DE)
(74) Vertreter: DREISS Patentanwälte PartG mbB

(56) Entgegenhaltungen:
- FR-A1- 2 798 445
- JP-A- 2014 047 790
- KR-Y1- 200 474 147
- US-A1- 2003 001 124

## Beschreibung

Die Erfindung betrifft ein Fluidventil zum Stellen eines Prozessfluids.

Vorrichtungen zum manuellen Einstellen einer Position eines Absperrelements eines Fluidventils sind allgemein bekannt. Beispielhaft wird auf EP 1176347 verwiesen.

KR 200 474 147 Y1 offenbart einen Wasserspender.

FR 2 798 445 A1 offenbart ein halbmondförmiges, drehbares Element, dessen Steuerkontur eine Bewegung einer Ventilstange begrenzt.

US 2003/001124 A1 offenbart ein Ventil, bei dem ein Element in eine Ausnehmung einer Ventilstange einbringbar ist.

JP 2014 047790 A offenbart ein Druckablassventil, das ohne eine Antriebsquelle wie eine Stromquelle und Luft betrieben werden kann und nach dem Betrieb einen Freigabezustand beibehält.

Das dem Stand der Technik zu Grunde liegende Problem wird durch ein Fluidventil nach dem Anspruch 1 gelöst. Vorteilhafte Ausführungsformen sind in den Unteransprüchen angegeben.

Es wird gemäß einem Aspekt dieser Beschreibung ein Fluidventil zum Stellen eines Prozessfluids vorgeschlagen. Das Fluidventil umfasst: Einen Ventilkörper mit einem in einem Fluidkanal angeordneten Ventilsitz; eine entlang einer Zustellachse bewegbare Ventilspindel mit daran angeordnetem Verschlusselement, welches bei einem Anliegen an dem Ventilsitz den Fluidkanal verschließt; und ein manuell bedienbares und zum Ventilkörper bewegbares Sperrelement mit einem Sperrabschnitt, wobei das Sperrelement in einer Sperrposition mit dem Sperrabschnitt derart in eine Sperrkontur der Ventilspindel eingreift, sodass das Sperrelement eine Bewegung der Ventilspindel entlang der Zustellachse begrenzt.

Vorteilhaft ist das Fluidventil auf diese Art und Weise manuell bedienbar. Somit wird die Funktionalität dahingehend erweitert, als dass eine konstruktiv einfache Not- oder Hilfsbetätigung des Fluidventils ermöglicht wird.

Eine vorteilhafte Ausführungsform zeichnet sich dadurch aus, dass das Sperrelement einen Betriebsabschnitt aufweist, wobei das Sperrelement in einer Betriebsposition mit dem Betriebsabschnitt die Sperrkontur zur Bewegung der Ventilspindel freigibt. Durch den Betriebsabschnitt wird vorteilhaft sichergestellt, dass ein Normalbetrieb des Fluidventils unter Zuhilfenahme eines maschinellen Antriebs ermöglicht wird.

Eine vorteilhafte Ausführungsform zeichnet sich dadurch aus, dass der Sperrabschnitt ausgehend von dem Betriebsabschnitt eine stetige Dickenzunahme umfasst. Die stetige Dickenzunahme ermöglicht eine Krafteinleitung in die Sperrkontur der Ventilspindel. Folglich kann mittels einer Bewegung des Sperrelements in eine erste Raumrichtung die Ventilspindel in eine zweite Raumrichtung bewegt werden.

Eine vorteilhafte Ausführungsform zeichnet sich dadurch aus, dass die stetige Dickenzunahme bei der Überführung des Sperrelements in die Sperrposition die Sperrkontur der Ventilspindel derart mit Druck belastet, sodass sich die Ventilspindel in eine durch den Sperrabschnitt definierte Sperrposition bewegt. Folglich kann die Sperrposition der Ventilspindel durch die manuelle Betätigung des Sperrelements erreicht werden.

Eine vorteilhafte Ausführungsform zeichnet sich dadurch aus, dass das Verschlusselement den Fluidkanal öffnet, wenn sich die Ventilspindel in ihrer durch den Sperrabschnitt definierten Sperrposition befindet. Vorteilhaft kann das Fluidventil manuell geöffnet werden. Dies ist insbesondere bei der Anlagenmontage und -abnahme vorteilhaft, da auch ein energielos geschaltetes Fluidventil zu Testzwecken öffenbar ist. Des Weiteren können auf diese Art und Weise Notöffnungen von Fluidventilen durchgeführt werden. So können beispielsweise Anlagendefekte schneller behoben werden, wenn das Prozessfluid durch die Notöffnung von Ventilen aus der Anlage entfernbar ist.

Eine vorteilhafte Ausführungsform zeichnet sich dadurch aus, dass das Sperrelement eine Montageöffnung aufweist, wobei die Sperrkontur der Ventilspindel zumindest abschnittsweise in die Montageöffnung geführt ist, während sich das Sperrelement in einer Montageposition befindet.

Vorteilhaft wird eine einfache Montage und Demontage des Sperrelements bereitgestellt.

Eine vorteilhafte Ausführungsform zeichnet sich dadurch aus, dass eine Anschlagfläche derart von der Montageöffnung beabstandet ist, sodass bei einer Anlage der Anschlagfläche an einer zum Ventilkörper feststehenden Gegenfläche die Montageöffnung im Wesentlichen zentriert zur Zustellachse angeordnet ist. Vorteilhaft wird dadurch die Montage und Demontage des Sperrelements vereinfacht, da die Montageposition zur Kopplung der Ventilspindel mit dem Sperrelement durch manuelle Verlagerung des Sperrelements bis zu dem definierten Anschlag erreicht wird.

Eine vorteilhafte Ausführungsform zeichnet sich dadurch aus, dass das Sperrelement lotrecht zur Zustellachse verschiebbar angeordnet ist. Vorteilhaft wird durch die lotrechte Verschiebbarkeit des Sperrelements eine platzsparende und effektive Handbetätigung des Fluidventils bereitgestellt.

Eine vorteilhafte Ausführungsform zeichnet sich dadurch aus, dass das Sperrelement in zumindest einer Ausnehmung des Ventilkörpers verschiebbar angeordnet ist. Vorteilhaft muss durch die Anordnung des Sperrelements im Ventilkörper kein zusätzliches das Sperrelement haltende Bauteil vorgesehen werden.

Eine vorteilhafte Ausführungsform zeichnet sich dadurch aus, dass das Fluidventil einen Antrieb umfasst, und wobei das Sperrelement auf einer dem Antrieb abgewandten Seite des Ventilkörpers angeordnet ist. Vorteilhaft wird somit die Funktion des Sperrelements von den übrigen Funktionen des Fluidventils konstruktiv entkoppelt. Hierdurch werden Freiheitsgrade bei der Konstruktion des Antriebs, des Ventilkörpers und des Sperrelements aufrechterhalten.

Eine vorteilhafte Ausführungsform zeichnet sich dadurch aus, dass das Sperrelement derart ausgestaltet und zur Ventilspindel verschiebbar ist, sodass das Sperrelement in der Betriebsposition einen Ventilhub zum Stellen des Prozessfluids freigibt und in der Sperrposition den Ventilhub begrenzt.

Vorteilhaft beeinträchtigt das Sperrelement in der Betriebsposition den aktuatorischen Betrieb des Fluidventils nicht. Die Sperrposition des Sperrelements wird durch manuelles Verschieben des Sperrelements erreicht.

In einer weiteren vorteilhaften Ausführungsform ist das Sperrelement in der Betriebsposition zu dem Ventilkörper festlegbar. Hierdurch wird eine unbeabsichtigte Positionsänderung des Sperrelements verhindert.

Weitere Vorteile und Merkmale der Findung finden sich in der nachfolgenden Beschreibung von Ausführungsbeispielen, welche in der Zeichnung dargestellt sind. In der Zeichnung zeigen:
- Figur 1: einen schematischen Schnitt eines Fluidventils;
- Figur 2: ein Sperrelement in einer perspektivischen Ansicht;
- Figur 3: einen schematischen Schnitt des Fluidventils;
- Figur 4: das Sperrelement in einer Montageposition;
- Figur 5: das Sperrelement in einer Betriebsposition;
- Figur 6: das Sperrelement in einer Sperrposition;
- Figur 7: in einem schematischen Schnitt das Sperrelement in der Betriebsposition;
- Figur 8: in einem schematischen Schnitt das Sperrelement in der Sperrposition; und
- Figur 9: in einem schematischen Schnitt eine Ausführungsform des Fluidventils.

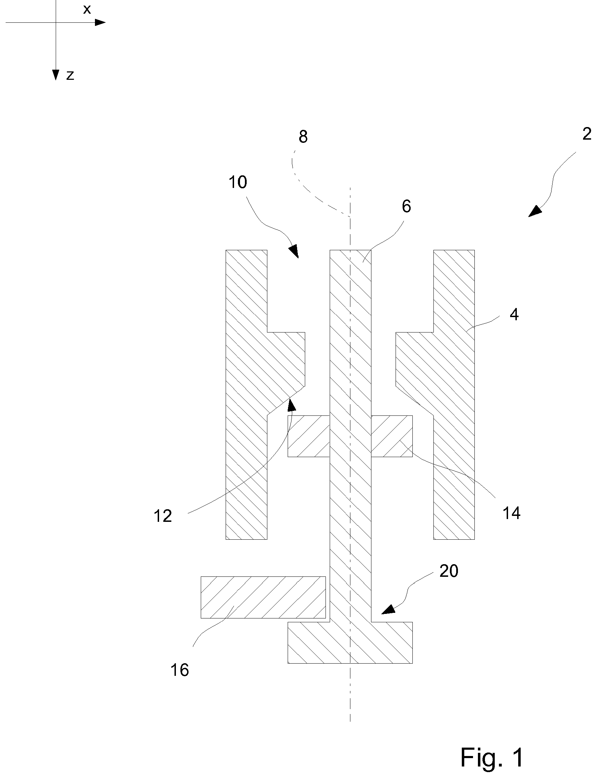

Figur 1 zeigt einen schematischen Schnitt eines Fluidventils 2. Innerhalb eines Ventilkörpers 4 verläuft eine Ventilspindel 6 entlang einer Zustellachse 8. Die Ventilspindel 6 ist entlang der Zustellachse 8 bewegbar. Der Ventilkörper 4 umfasst einen Fluidkanal 10 mit einem darin angeordneten Ventilsitz 12. Ein Verschlusselement 14, welches an der Ventilspindel 6 angeordnet ist, verschließt den Fluidkanal 10 bei einem Anliegen an dem Ventilsitz 12. Ein Sperrelement 16 ist zum Ventilkörper 4 bewegbar und manuell bedienbar. Das Sperrelement 16 umfasst einen Sperrabschnitt 18. In der gezeigten Sperrposition greift der Sperrabschnitt 18 in eine Sperrkontur 20 der Ventilspindel 6 ein, wodurch das Sperrelement eine Bewegung der Ventilspindel 6 entlang der Zustellachse 8 begrenzt.

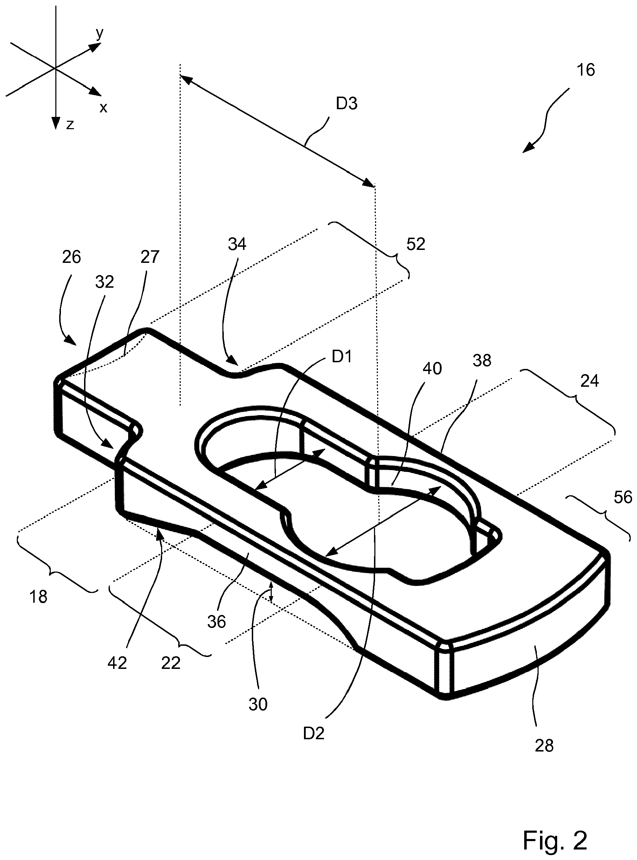

Figur 2 zeigt das Sperrelement 16 in einer perspektivischen Ansicht. Das Sperrelement 16 umfasst den Sperrabschnitt 18, einen Betriebsabschnitt 22 und einen Montageabschnitt 24. Des Weiteren umfasst das Sperrelement 16 eine erste distale Bedienfläche 26, um eine manuelle Verschiebung in eine Sperrrichtung x zu ermöglichen. Eine zweite distale Bedienfläche 28 dient zur manuellen Verschiebung des Sperrelements 16 in eine Montagerichtung entgegen der Sperrrichtung x. Die Bedienfläche 28 ist bevorzugt konvex ausgebildet. In einer Ausführungsform ist die Bedienfläche 26 gemäß einer angedeuteten Kontur 27 konkav ausgebildet. Durch die unterschiedliche Ausbildung der Bedienflächen, was sowohl Größe als auch Form angeht, ist für das Bedienpersonal die Funktion der jeweiligen Bedienfläche 26, 28 eindeutig identifizierbar.

Ausgehend von der ersten distalen Bedienfläche 26 weist das Sperrelement 16 in proximaler Richtung eine sprungartige Breitenvergrößerung auf, durch welche zwei Anschlagflächen 32 und 34 ausgebildet sind. Ausgehend von den Anschlagflächen 32 und 34 erstrecken sich in proximaler Richtung zwei Stege 36 und 38, welche innerhalb des Sperrabschnitts 18 und innerhalb des Betriebsabschnitts 22 bis zum Rand des Montageabschnitts 24 durch eine lichte Distanz D1 so weit voneinander beabstandet sind, dass die Sperrkontur der Ventilspindel nicht vom Sperrelement 16 trennbar ist. Im Bereich des Montageabschnitts 24 geben die Stege 36 und 38 eine zweite lichte Distanz D2 frei, sodass die Sperrkontur der Ventilspindel durch eine Montageöffnung 40 führbar ist.

Der Betriebsabschnitt 22 gibt einen Ventilhub 30 zum Stellen des Prozessfluids innerhalb des Fluidkanals frei. Der Sperrabschnitt 18 umfasst ausgehend von dem Betriebsabschnitt 22 eine stetige Dickenvergrößerung 42. Die Dickenvergrößerung 42 ist auch als Dickenverringerung ausgehend von den Anschlagflächen 32 und 34 bezeichenbar. In proximaler Richtung verjüngen sich somit die Stege 36 und 38, um den Ventilhub 30 im Betriebsabschnitt 22 freizugeben.

Eine Mittelachse der Montageöffnung 40 ist parallel zur x-Achse durch eine Distanz D3 derart von den Anlageflächen 32, 34 beabstandet, sodass bei einer Anlage einer der Anschlagflächen 32, 34 an einer zugehörigen Gegenfläche, welche beispielsweise im Ventilkörper ausgebildet ist, die Mittenachse der Montageöffnung 40 mit der Zustellachse im Wesentlichen zusammenfällt.

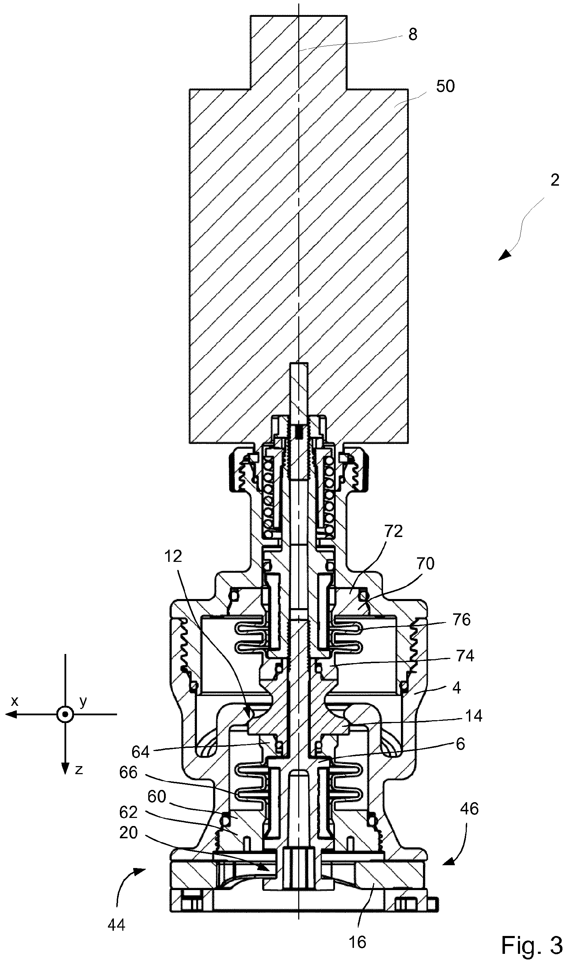

Figur 3 zeigt einen schematischen Schnitt des Fluidventils 2. Der Ventilsitz 12 trennt zwei Kammern, welche innerhalb des Ventilkörpers 4 angeordnet sind. Das Sperrelement 16 ist lotrecht zur Zustellachse 8 verschiebbar innerhalb zweier Ausnehmungen 44 und 46 des Ventilkörpers 4 angeordnet. Das Sperrelement 16 befindet sich vorliegend in einer Betriebsposition und gibt den Ventilhub zum unblockierten Öffnen und Schließen des Fluidkanals 10 frei. Die Sperrkontur 20 ist vorliegend als sich umfangsseitig öffnende Ringnut ausgebildet. Ein Antrieb 50 ist mit der Ventilspindel 6 gekoppelt und ist bevorzugt nichtsperrend ausgebildet, um durch eine durch das Sperrelement 16 verursachte Bewegung der Ventilspindel 6 diese in einen blockierten Zustand zu überführen.

Bewegt sich die Ventilspindel in z-Richtung, so werden die beiden Kammern des Fluidkanals 10 Fluid-führend miteinander verbunden, was zu einer Öffnung des Fluidkanals 10 führt. Vorliegend ist das Sperrelement 16 derart angeordnet, dass das Fluidventil 2 ausgehend von der gezeigten geschlossenen Position durch eine Bewegung des Sperrelements 16 in x-Richtung in eine geöffnete Position überführbar ist. Selbstverständlich kann das Sperrelement 16 auch so angeordnet und ausgebildet sein, dass dieses bei einer Überführung in eine Sperrposition das Fluidventil 2 schließt.

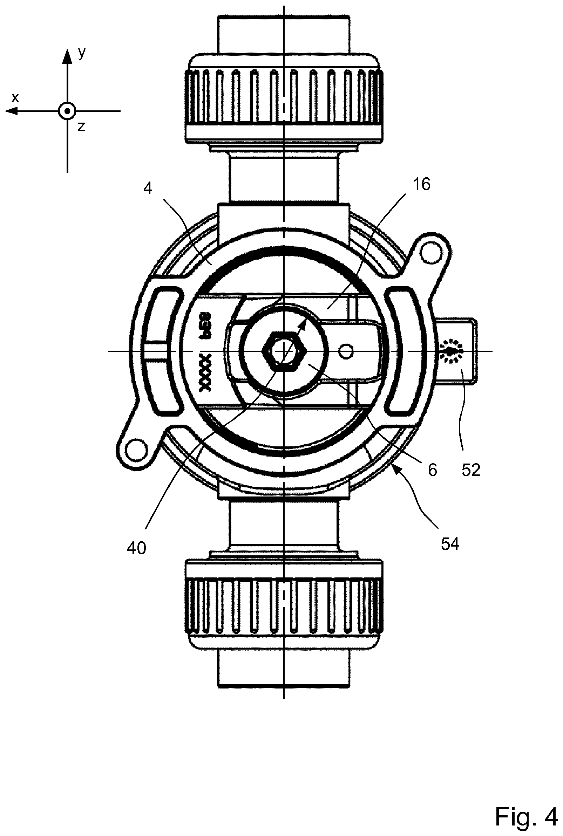

Figur 4 zeigt das Sperrelement 16 in einer Montageposition zum Ventilkörper 4. Die Ventilspindel 6 kann mit ihrer Sperrkontur durch die Montageöffnung 40 hindurchgeführt werden. Innerhalb des Ventilkörpers 4 liegen die Anschlagflächen 32 und 34 am Ventilkörper 4 an und der verjüngte distale Abschnitt 52 ragt zumindest abschnittsweise von einer Außenfläche 54 des Ventilkörpers 4 ab. In der Montageposition des Sperrelements 16 wird die Sperrkontur der Ventilspindel 6 zumindest abschnittsweise in bzw. durch die Montageöffnung 40 geführt.

Ein erstes Dichtelement 60 ist mit einem ersten Abschnitt 62 zu dem Ventilkörper 4 festgelegt und mit einem zweiten Abschnitt 64 zu der Ventilspindel 6 festgelegt. Ein flexibler Zwischenabschnitt 66 verbindet die beiden Abschnitte 62 und 64. Mittels des ersten Dichtelements 60 ist ein die Sperrkontur 20 aufweisender Abschnitt der Ventilspindel 6 gegenüber dem Fluidkanal 10 abgedichtet. Ein zweites Dichtelement 70 umfasst einen ersten Abschnitt 72, welcher zu dem Ventilkörper 4 festgelegt ist, und einen zweiten Abschnitt 74, welcher zu der Ventilspindel 6 festgelegt ist. Ein flexibler Zwischenabschnitt 76 verbindet den ersten und den zweiten Abschnitt 72 und 74. Damit ist ein antriebsseitiger Abschnitt der Ventilspindel 6 gegenüber dem Fluidkanal 10 abgedichtet.

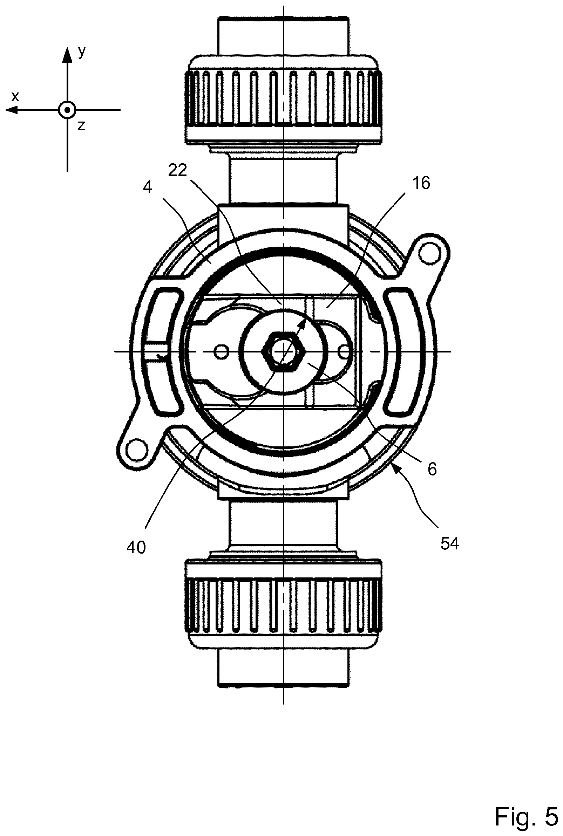

Figur 5 zeigt das Sperrelement 16 in der Betriebsposition zum Ventilkörper 4. Über die Außenfläche 54 des Ventilkörpers 4 ragt das Sperrelement 16 nicht hinaus. Der Betriebsabschnitt 22 gibt die Sperrkontur der Ventilspindel 6 insoweit frei, als dass der aktuatorischen Antrieb zu einem Öffnen und Schließen des Fluidventils führt.

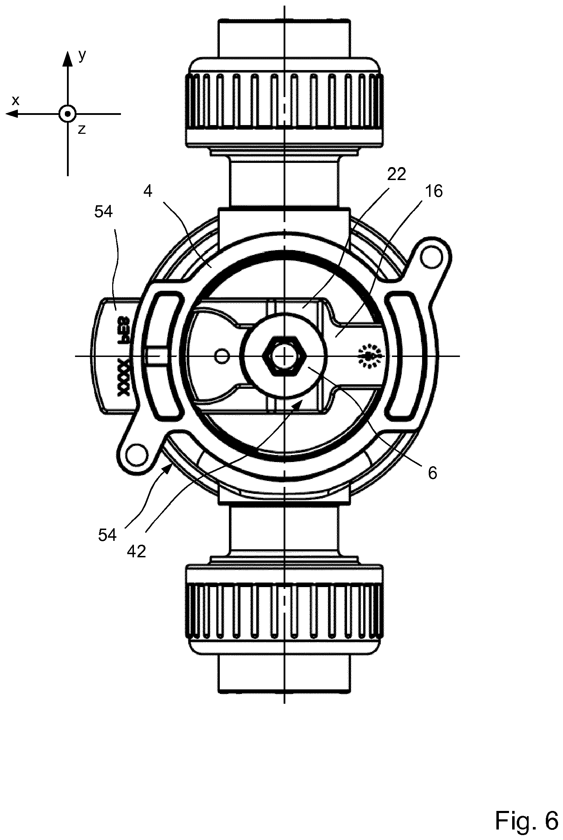

Figur 6 zeigt das Sperrelement 16 in der Sperrposition zum Ventilkörper 4. Ausgehend von der Betriebsposition wird durch ein Verschieben des Sperrelements 16 in Sperrrichtung x erreicht, dass eine Bewegung der Ventilspindel 6 entgegen einer z-Richtung verhindert wird. Insbesondere die Fläche der Dickenvergrößerung 42 sorgt bei einer Verschiebung des Sperrelements 16 in Sperrrichtung x zu einer Bewegung der Ventilspindel 6 in die z-Richtung. Folglich wird in der Sperrposition der Ventilhub begrenzt und in der Betriebsposition der Ventilhub freigegeben.

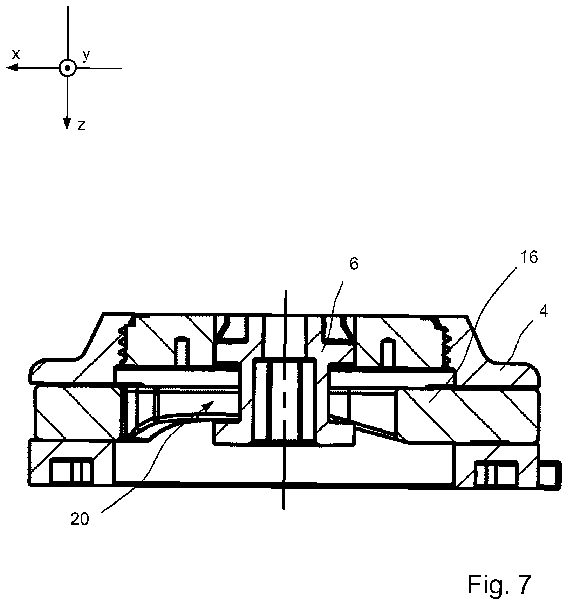

Figur 7 zeigt in einem schematischen Schnitt analog zu Figur 3 das Sperrelement 16 in der Betriebsposition zu dem Ventilkörper 4. Das Sperrelement 16 greift in der Betriebsposition mit seinen Stegen so weit in die Sperrkontur 20 der Ventilspindel 6 ein, als dass der Ventilhub zum Öffnen und Schließen des Fluidventils freigegeben ist.

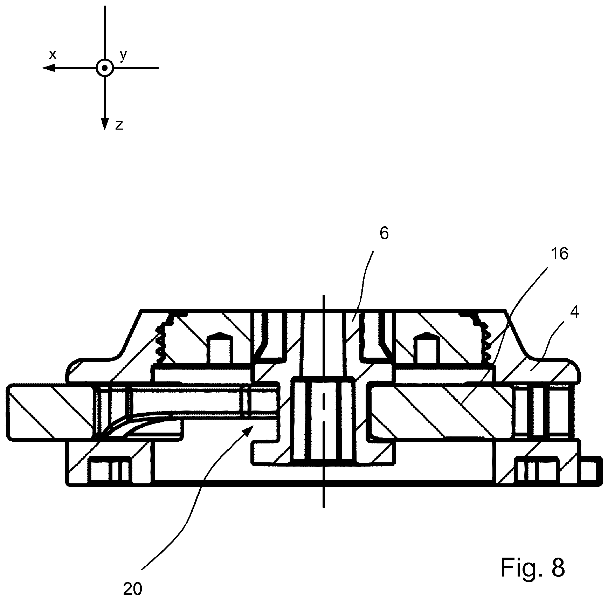

Figur 8 zeigt in einem schematischen Schnitt analog zu Figur 6 das Sperrelement 16 in der Sperrposition zu dem Ventilkörper 4. Die Bedienfläche 26 wird beispielsweise mit einem Schraubendreher in die Ausnehmung 46 hineingedrückt, sodass ausgehend von der Betriebsposition die Dickenvergrößerung in die Sperrkontur 20 einfährt und die Ventilspindel in z-Richtung drückt. In der Sperrposition ist das Sperrelement 16 in die Sperrkontur 20 eingefahren und hält damit die Ventilspindel 6 in einer definierten Sperrposition. Um die Ventilspindel 6 aus der Sperrposition herauszuführen, wird der von der Außenfläche 54 abragende distale zweite Abschnitt 56 beispielsweise mit dem Daumen so weit in die Ausnehmung 44 eingedrückt, bis der distale Abschnitt 56 bündig mit der Außenfläche 54 abschließt, womit die Betriebsposition des Sperrelements 16 erreicht ist.

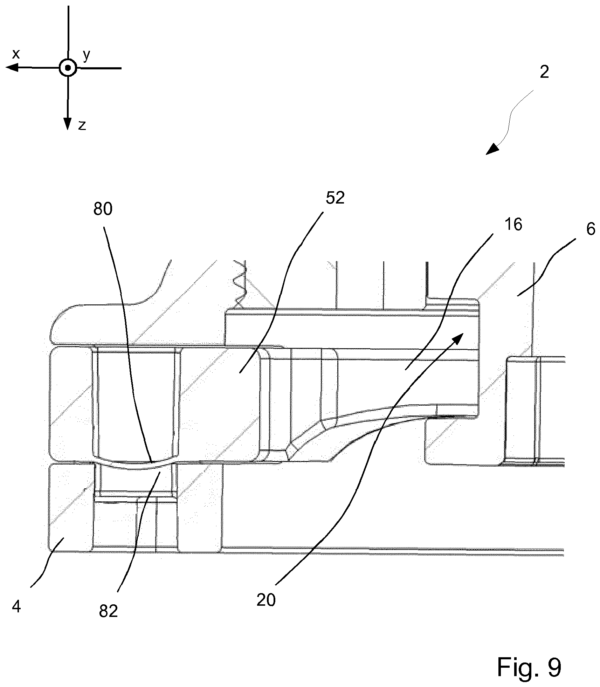

Figur 9 zeigt in einem schematischen Schnitt eine Ausführungsform des Fluidventils 2. Der distale Abschnitt 52 des Sperrelements 16 umfasst einen Rastabschnitt 80, welcher in einen korrespondierenden Rastabschnitt 82 des Ventilkörpers 4 eingreift. Der Rastabschnitt 80 ist vorliegend als Vorsprung bzw. konkave Wölbung ausgebildet und wird durch eine Ausdünnung des Materials des distalen Abschnitts 52 bereitgestellt. Der Rastabschnitt 82 ist als Bohrung ausgeführt, um den Rastabschnitt 80 in einer Öffnung der Bohrung aufzunehmen. Die Rastabschnitte 80 und 82 sind so aufeinander abgestimmt, dass das Sperrelement 16 in seiner gezeigten Betriebsposition zu dem Ventilkörper 4 festlegbar ist. Dadurch wird verhindert, dass sich das Sperrelement 16 aus der gezeigten Betriebsposition in ungewollter Weise herausbewegt. Auf der anderen Seite wird ermöglicht, dass durch Überwinden einer Kraftschwelle das Sperrelement 16 aus der Betriebsposition heraus bewegbar ist. Selbstverständlich können die Rastabschnitte 80 und 82 auch an anderer Stelle als an der gezeigten Stelle des distalen Abschnitts 52 angeordnet sein. Im Übrigen wird auf die Beschreibung der vorigen Figuren verwiesen.

## Patentansprüche

1. Ein Fluidventil (2) zum Stellen eines Prozessfluids, wobei das Fluidventil (2) umfasst:
- einen Ventilkörper (4) mit einem in einem Fluidkanal angeordneten Ventilsitz;
- eine entlang einer Zustellachse bewegbare Ventilspindel (6) mit daran angeordnetem Verschlusselement, welches bei einem Anliegen an dem Ventilsitz den Fluidkanal verschließt; und
- ein manuell bedienbares und zum Ventilkörper (4) bewegbares Sperrelement (16) mit einem Sperrabschnitt, wobei das Sperrelement (16) in einer Sperrposition mit dem Sperrabschnitt derart in eine Sperrkontur der Ventilspindel (6) eingreift, sodass das Sperrelement (16) eine Bewegung der Ventilspindel (6) entlang der Zustellachse begrenzt, **dadurch gekennzeichnet,**
- **dass** das Sperrelement (16) eine Montageöffnung mit einer Mittelachse parallel zur Zustellachse aufweist, und
- **dass** im Bereich eines Montageabschnitts (24) des Sperrelements (16) Stege (36, 38) eine lichte Distanz (D2) freigeben, sodass die Sperrkontur der Ventilspindel (6) zumindest abschnittsweise durch die Montageöffnung (40) führbar ist, während sich das Sperrelement (16) in einer Montageposition befindet.

2. Das Fluidventil (2) nach dem Anspruch 1, wobei das Sperrelement (16) einen Betriebsabschnitt aufweist, und wobei das Sperrelement (16) in einer Betriebsposition mit dem Betriebsabschnitt die Sperrkontur zur Bewegung der Ventilspindel (6) freigibt.

3. Das Fluidventil (2) nach Anspruch 1 oder 2, wobei der Sperrabschnitt ausgehend von dem Betriebsabschnitt eine stetige Dickenzunahme umfasst.

4. Das Fluidventil (2) nach dem Anspruch 3, wobei die stetige Dickenzunahme bei der Überführung des Sperrelements (16) in die Sperrposition die Sperrkontur der Ventilspindel (6) derart mit Druck belastet, sodass sich die Ventilspindel (6) in eine durch den Sperrabschnitt definierte Sperrposition bewegt.

5. Das Fluidventil (2) nach einem der vorstehenden Ansprüche, wobei das Verschlusselement den Fluidkanal öffnet, wenn sich die Ventilspindel (6) in ihrer durch den Sperrabschnitt definierten Sperrposition befindet.

6. Das Fluidventil (2) nach einem der vorstehenden Ansprüche, wobei eine Anschlagfläche derart von der Montageöffnung beabstandet ist, sodass bei einer Anlage der Anschlagfläche an einer zum Ventilkörper (4) feststehenden Gegenfläche die Montageöffnung im Wesentlichen zentriert zur Zustellachse angeordnet ist.

7. Das Fluidventil (2) nach einem der vorstehenden Ansprüche, wobei das Sperrelement (16) lotrecht zur Zustellachse verschiebbar angeordnet ist.

8. Das Fluidventil (2) nach einem der vorstehenden Ansprüche, wobei das Sperrelement (16) in zumindest einer Ausnehmung des Ventilkörpers (4) verschiebbar angeordnet ist.

9. Das Fluidventil (2) nach einem der vorstehenden Ansprüche, wobei das Fluidventil (2) einen Antrieb umfasst, und wobei das Sperrelement (16) auf einer dem Antrieb abgewandten Seite des Ventilkörpers (4) angeordnet ist.

10. Das Fluidventil (2) nach dem Anspruch 2, wobei das Sperrelement (16) derart ausgestaltet und zur Ventilspindel (6) verschiebbar ist, sodass das Sperrelement (16) in der Betriebsposition einen Ventilhub zum Stellen des Prozessfluids freigibt und in der Sperrposition den Ventilhub begrenzt.

11. Das Fluidventil (2) nach einem der vorstehenden Ansprüche 2 bis 10, wobei das Sperrelement (6) in der Betriebsposition zu dem Ventilkörper (4) festlegbar ist.

## Claims

1. A fluid valve (2) for adjusting a process fluid, the fluid valve (2) comprising:
- a valve body (4) comprising a valve seat arranged in a fluid channel;
- a valve spindle (6) which is movable along an infeed axis and comprises a closure element arranged thereon which closes the fluid channel when in contact with the valve seat; and
- a manually operable blocking element (16) which can be moved in relation to the valve body (4) and comprises a blocking portion, the blocking element (16), when in a blocking position, engaging with the blocking portion in a blocking contour of the valve spindle (6) such that the blocking element (16) limits a movement of the valve spindle (6) along the infeed axis, **characterized in that**
- the blocking element (16) has a mounting opening which comprises a central axis parallel to the infeed axis, and **in that**
- in the region of a mounting portion (24) of the blocking element (16), ridges (36, 38) allow a thin gap (D2) such that the blocking contour of the valve spindle (6) can be guided, at least in portions, through the mounting opening (40) while the blocking element (16) is in a mounting position.

2. The fluid valve (2) according to claim 1, wherein the blocking element (16) has an operating portion, and wherein the blocking element (16), when in an operating position, clears the blocking contour by means of the operating portion in order to move the valve spindle (6).

3. The fluid valve (2) according to claim 1 or claim 2, wherein the blocking portion has a continuous increase in thickness starting from the operating portion.

4. The fluid valve (2) according to claim 3, wherein the continuous increase in thickness, when the blocking element (16) is moved into the blocking position, pressurizes the blocking contour of the valve spindle (6) such that the valve spindle (6) is moved into a blocking position defined by the blocking portion.

5. The fluid valve (2) according to any of the preceding claims, wherein the closure element opens the fluid channel when the valve spindle (6) is in its blocking position defined by the blocking portion.

6. The fluid valve (2) according to any of the preceding claims, wherein a stop surface is spaced apart from the mounting opening such that, when the stop surface abuts a counter surface that is stationary in relation to the valve body (4), the mounting opening is arranged in a substantially centered manner in relation to the infeed axis.

7. The fluid valve (2) according to any of the preceding claims, wherein the blocking element (16) is arranged so as to be displaceable perpendicularly to the infeed axis.

8. The fluid valve (2) according to any of the preceding claims, wherein the blocking element (16) is arranged so as to be displaceable in at least one recess of the valve body (4).

9. The fluid valve (2) according to any of the preceding claims, wherein the fluid valve (2) comprises a drive, and wherein the blocking element (16) is arranged on a side of the valve body (4) facing away from the drive.

10. The fluid valve (2) according to claim 2, wherein the blocking element (16) is designed and is displaceable in relation to the valve spindle (6) in such a way that the blocking element (16) allows a valve stroke for adjusting the process fluid when in the operating position, and limits the valve stroke when in the blocking position.

11. The fluid valve (2) according to any of the preceding claims 2 to 10, wherein the blocking element (6) can be fixed in relation to the valve body (4) in the operating position.

## Revendications

1. Vanne de fluide (2) destinée à régler un fluide de processus, ladite vanne de fluide (2) comprenant:
- un corps de vanne (4) ayant un siège de vanne disposé dans un canal de fluide;
- une tige de vanne (6) qui est déplaçable le long d'un axe d'avance et comprend un élément d'obturation qui est disposé sur celle-ci et qui ferme le canal de fluide lorsqu'il est en appui sur ledit siège de vanne; et
- un élément de blocage (16) qui est actionnable manuellement et peut être déplacé par rapport au corps de vanne (4) et qui comprend une section de blocage; dans laquelle, dans une position de blocage, ledit élément de blocage (16) se prend par ladite section de blocage dans un contour de blocage de la tige de vanne (6) de telle sorte que l'élément de blocage (16) limite un déplacement de la tige de vanne (6) le long de l'axe d'avance, **caractérisée par le fait**
- **que** l'élément de blocage (16) présente une ouverture de montage ayant un axe central parallèle à l'axe d'avance, et
- **que**, dans la zone d'une section de montage (24) de l'élément de blocage (16), des barrettes (36, 38) libèrent une distance libre (D2) de sorte que le contour de blocage de la tige de vanne (6) peut passer au moins par sections à travers l'ouverture de montage (40), alors que l'élément de blocage (16) se trouve dans une position de montage.

2. Vanne de fluide (2) selon la revendication 1, dans laquelle l'élément de blocage (16) présente une section de service, et dans laquelle l'élément de blocage (16) libère, dans une position de service, avec la section de service, le contour de blocage pour déplacer la tige de vanne (6).

3. Vanne de fluide (2) selon la revendication 1 ou 2, dans laquelle la section de blocage comprend une augmentation régulière d'épaisseur à partir de ladite section de service.

4. Vanne de fluide (2) selon la revendication 3, dans laquelle, lorsque l'élément de blocage (16) passe dans la position de blocage, l'augmentation régulière d'épaisseur soumet le contour de blocage de la tige de vanne (6) à une pression telle que la tige de vanne (6) se déplace dans une position de blocage définie par la section de blocage.

5. Vanne de fluide (2) selon l'une quelconque des revendications précédentes, dans laquelle l'élément d'obturation ouvre le canal de fluide lorsque la tige de vanne (6) se trouve dans sa position de blocage définie par la section de blocage.

6. Vanne de fluide (2) selon l'une quelconque des revendications précédentes, dans laquelle une surface de butée est espacée de l'ouverture de montage de telle sorte que, lorsque la surface de butée est en appui sur une contre-surface fixe par rapport au corps de vanne (4), l'ouverture de montage est disposée de manière pour l'essentiel centrée par rapport à l'axe d'avance.

7. Vanne de fluide (2) selon l'une quelconque des revendications précédentes, dans laquelle l'élément de blocage (16) est disposé de manière à être déplaçable verticalement par rapport à l'axe d'avance.

8. Vanne de fluide (2) selon l'une quelconque des revendications précédentes, dans laquelle l'élément de blocage (16) est disposé de manière déplaçable dans au moins un évidement du corps de vanne (4).

9. Vanne de fluide (2) selon l'une quelconque des revendications précédentes, dans laquelle la vanne de fluide (2) comprend un entraînement, et dans lequel l'élément de blocage (16) est disposé sur un côté du corps de vanne (4), qui est opposé à l'entraînement.

10. Vanne de fluide (2) selon la revendication 2, dans laquelle l'élément de blocage (16) est conçu et déplaçable par rapport à la tige de vanne (6) de telle sorte que, en position de service, l'élément de blocage (16) libère une course de vanne pour le réglage du fluide de processus et limite la course de vanne en position de blocage.

11. Vanne de fluide (2) selon l'une quelconque des revendications 2 à 10 précédentes, dans laquelle, en position de service, l'élément de blocage (6) peut être fixé par rapport au corps de vanne (4).
